# EUROPEAN PATENT SPECIFICATION

(11) **EP 1 680 940 B1**
(45) Date of publication and mention of the grant of the patent: **09.03.2016**
(21) Application number: 04791422.1
(22) Date of filing: 22.10.2004
(51) Int. Cl.: H04L 29/06, H04W 12/06

(54) **METHOD OF USER AUTHENTICATION**
VERFAHREN ZUR BENUTZERAUTHENTIFIKATION
PROCEDE PERMETTANT D'AUTHENTIFIER UN UTILISATEUR

(30) Priority: 23.10.2003 FI 20031558
(43) Date of publication of application: 19.07.2006
(73) Proprietor: SSH Communications Security Oyj, 00380 Helsinki (FI)
(72) Inventor: SILTANEN, Samuli, FI-00670 (FI); SILTANEN, Antti, FI-02770 Espoo (FI)
(74) Representative: Ruuskanen, Juha-Pekka
(86) International application number: PCT/FI2004/000630
(87) International publication number: WO 2005/041608

(56) References cited:
- EP-A- 0 998 073
- WO-A-02/19593
- US-A1- 2003 101 345

## Description

### TECHNICAL FIELD

The invention is concerned with a method for user authentication, especially in connection with giving access to services.

### BACKGROUND ART

The Global System for Mobile Communication (GSM) is a standard for digital wireless communications with services, such as voice telephony. GSM, together with other technologies, is part of an evolution of wireless mobile telecommunication that includes e.g. General Packet Radio System (GPRS), and Universal Mobile Telecommunications Service (UMTS).

A smart card is any plastic card (like a credit card) with an embedded integrated circuit for storing information. The Subscriber Identity Module (SIM) inside GSM phones was originally designed as a secure way to connect individual subscribers to the network and works as a smart card that saves subscriber information about identity, subscription, subscriber environment, radio environment and other information. It can also hold security functions, such as RSA keys described later on.

UMTS is the next (3^{rd}) generation mobile communication system, which provides an enhanced range of multimedia services, such as video. UMTS has specified the use of the USIM (universal SIM) as the evolution of SIM. In GSM and UMTS networks, the (U)SIM card is central both for subscriber identification and for providing value added services to users. Usually referred to as a SIM card, the USIM (UMTS Subscriber Identity Module) is the user subscription to the UMTS mobile network. The USIM contains relevant information that enables access onto the subscribed operator's network.

The mobile equipment is uniquely identified by the International Mobile Equipment Identity (IMEI) being a unique code that corresponds to a specific GSM handset. The SIM card also contains the International Mobile Subscriber Identity (IMSI), identifying the subscriber, a secret key for authentication, and other user information. SIM cards also contain additional equipment information in form of the Integrated Circuit Card ID (ICCID, number). ICCID is the fabricated code written on the original card to show the card serial number. According to the ETSI standard, the ICCID code always has to be written on the SIM card. The ICCID can both be read from the card and be stored electronically. The operators use the ICCID information for example in their logistic systems to connect the card to a given user and the ICCID code thus constitutes reference information.

The central component of the network subsystem is the mobile services switching center. This acts like a normal switching node of the PSTN (Public Switched Telephone Network) or ISDN (Integrated Services Digital Network) and connects the mobile signal to these fixed networks. It additionally provides all the functionality needed to handle a mobile subscriber, such as registration, authentication, location updating, hand-overs and call routing to a roaming subscriber. The Mobile Station Integrated Service Digital Network Number, MSISDN, is the standard international telephone number used to identify a given subscriber.

In an increasingly connected world and with the advances in mobile communication technology, business and individuals are nowadays able to communicate in almost all matters. One consequence of this revolution is that a new set of challenges has arisen to ensure the security and integrity of any transform of information as well as confidence that the connected individuals are what they say there are.

Different authentication solutions have been designed to defend systems against these threats as well as protecting the user ID during communication between the user terminal and identification server. Authentication is the process that verifies that a user actually is who he or she claims to be. Access control concerns determining level of functionality allowed for a specific user. Access control is typically preceded by authentication.

Working from remote locations using electronic networks require means of identification and authentication prior to getting access. The most common way to authenticate users is by having the user enter a usemame and a static password and by entering the correct combination of username and password the end user gets the access. To be authenticated, users enter user ID and PIN and maybe some other access code. Passwords and PINs keyed in are, however, vulnerable to be captured in a variety of ways including screen capture monitoring or direct observation, also known as shoulder surfing.

For example short messaging service (SMS) solutions are used in mobile phones and to send mobile users onetime access codes for secure entry in the web based applications Using static passwords is not very secure and systems and applications protected only by such passwords are quite often vulnerable to attacks. There are however stronger forms of authentication available, such as using onetime password and challenge-respond techniques.

Strong authentication usually includes user security tokens. Using a mobile device as a security token for authentication is very useful. Some security services base their use on cryptography. Cryptography can be divided into two basic concepts; symmetric techniques that use secret keys and asymmetric ones that use pairs of public and private keys.

A very common asymmetric algorithm is RSA. RSA is based on mathematical relations of very large primes. Asymmetric encryption is also called public key encryption. The asymmetric process is used with a secret and a public key. It is also possible to use asymmetric technique for digital signatures for authentication purposes.

Public key encryption is based on pairs of keys (a public and private with a mathematical relation) The public key part will always be public and the private will never be public. Something encrypted with your public key can only be decrypted with your private key. A digital signature is the result of a cryptographic process made with the private key.

A very useful feature with public key cryptography is you can determine who did what and this is typically useful for identifying a sender and receiver. The sender may digitally sign the message making it possible for the receiver to verify the identity of the sender.

In this solution also digital certificates are needed. The digital certificate could be described as a digital signature proving your public key actually belongs to you. Hence a digital certificate is an electronic piece of information like a document vouching for the ownership of the public key. Digital signatures and certificates will only work if there is a mutual understanding between parties regarding trust of a certificate.

Hashing algorithms accept any amount of data as input and produce a given hash value as output. The output lengths are 160 bit (20 byte) for sha-1 and 128 bit (16 byte) for MD 5. The output hash value is also commonly called a messages digest. The hashing process is one way only and it is not possible to derive the original input from the message digest. A hash process can not be reversed. Message digits are the base for most digital signature standards. Instead of signing an entire document only the message digest is signed.

The Subscriber Identity Module (SIM) is the security component making strong authentication possible within public mobile networks based on GSM and it successors GPRS and UMTS. Every SIM has a secret key shared only with the originating network operator's authentication center (AUC).

The authentication method used between the SIM and AUC is based on a challenge response mechanism with random numbers to protect against replay attacks. The SIM receives a random number, computes result by using a special algorithm and the key. The response from the SIM is verified against a result provided by the originating network provider.

For the highest possible security, digital signatures are used. Disadvantages with known solutions when using digital signatures is the complicated signaling, e.g. the need of using certificates in verifying the sender.

The following publications are presented as prior art with respect to different authentication solutions involving mobile terminals and/or digital signatures. WO00/67446 is mentioned as prior art solution that presents a SIM based authentication mechanism for messages.

In US patent 2002/0169966 a client is authenticated by transmitting or beaming a telecommunication network subscriber's authentication to the client from a device over a wireless link.

EP application 1095782 is an example of a solution wherein private keys and digital certificates are used for client authentication.

In EP application 1102157, the solution comprises a method for secure login communication system including a mobile unit, mobile communication network, an authentication center, an application server, a computer and an untrusted network. The authentication center sends a simple token to the server, which sends said token to the user over the data connection. Finally, the user reads the token on the screen of his personal computer and sends the token as a text message from the mobile unit to the authentication center, which also obtains the mobile phone number and the cell identification of the user. An advantage is that no extra PIN code is required.

In WO01/31840, there is presented a solution that uses a onetime password and a device specific identify (IMEI).

WO 02/19593 discloses a system and method for verifying the identity of an end-user. The end-user requests to access an external application. The external application sends an authentication request to an authentication server, which generates a random token. The generated token is transmitted to the end-user. The end-user enters the generated token and a personal identification number into a cellular terminal connected to a GSM network. At least the token is encrypted using a secret key stored within the cellular terminal and transmitted through the GSM network to an authentication gateway. The token is decrypted by the authentication gateway using either the same secret key or a key matched to the secret key. The token is then transmitted to the authentication server where the received key is compared to the generated key. The results of the comparison are transmitted to the external application.

US 2003/101345 A1 discloses that a parameter to be used in authentication is defined for the operator. A secret which may be stored e.g. in a subscriber identity module is calculated from the operator parameter and a subscriber key. An authentication response is calculated from the secret and the challenge to be used in authentication with a one-way function.

### THE OBJECT OF THE INVENTION

The object. of the invention is to develop a system for user authentication by using mobile phones and digital signatures that is simpler than those of the prior art but still having a high security level.

### SUMMARY OF THE INVENTION

The invention is defined by the independent claims. More specific embodiments are defined by the dependent claims.

The invention is concerned with user authentication in a network comprising a mobile terminal, a service provider and an authentication server. The mobile terminal has a smart card with security functions and user/equipment specific information. In the method, the user gives identity information to the service provider as a reply on a request for using a service provided by the service provider. The identity information given by the user is sent from the service provider to the authentication server, which generates a random number, which is sent to the smart card of the mobile terminal. The smart card creates a message by combining equipment specific information in the card and the random number. The message is digitally signed by the smart card and then sent to the authentication server. The authentication server decrypts the message and compares the content to originally created message information. The authentication server sends a confirmation to the service provider if the content of the message and said originally created message information correspond to each other.

The preferable embodiments of the invention have the characteristics of the subclaims and are shortly referred to in the following.

The identity information given by the user includes the telephone number of the mobile terminal, which in the GSM network consists of The Mobile Station Integrated Service Digital Network Number, MSISDN, which is the standard international telephone number used to identify a given subscriber. The smart card of the mobile terminal is then a Subscriber Identity Module (SIM) card or an Universal Subscriber Identity Module (USIM) card.

The security functions consists of asymmetric security functions, such as RSA public and private keys.

When the service provider sends the identity information given by the user to the authentication server, the authentication server preferably checks if the user is known, e.g. on the basis of the telephone number.

When the memory card of the mobile terminal gets the random number from the authentication server, equipment information, such as the integrated circuit card ID (ICCID) number in the card is combined with the random number. Thereafter a message is formed consisting of a header, the random number and the ICCID number. A hash is then created from the message, which is signed by a private key stored in the smart card.

The signed message is decrypted by a public key stored in the authentication server and the content of the message is compared to the originally created random number and/or to the ICCID code and/or the telephone number that sent the message.

The solution of the invention is very easy to use compared to methods based on smart cards, since it is not bound to any special cards, readers or software that supports it and not even to a given PC that asks for the identification. In the invention, the mobile phone itself is the reader and the smart card consists of the SIM card.

A further advantage of the method of the invention is that the private key is bound to the environment/media that produces the signature, i.e. to the SIM card by means of the ICCID code. In prior art methods, also in those digital signature methods that are based on the SIM card, the private key is not bound to any other factor.

In the following the invention is described in detail by means of a signal diagram step by step. The intention is not to restrict the invention to the details of the figure and accompanying text.

### FIGURES

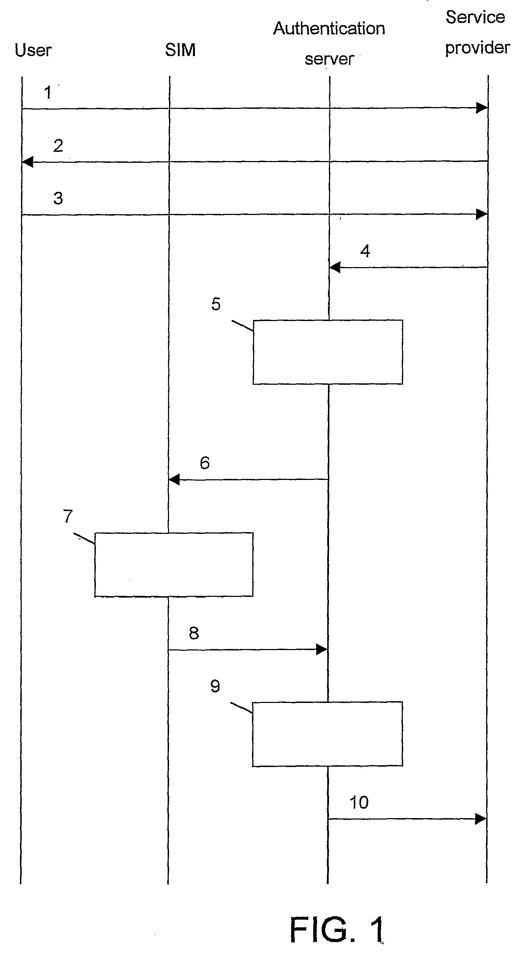

Figure 1 shows a signal diagram of an example of a method of the invention.

### DETAILED DESCRIPTION

The method presented in figure 1 takes place in a network comprising a user with his mobile terminal, an authentication server and a service provider.

The service provider provides services, through e.g. internet, for authenticated users. Usually this means that the user has to register himself in advance to have the right to use the services and most often maybe pay for it. therefore the service provider checks the identity of each user requesting use of the services.

The user has a mobile terminal, which in this embodiment is assumed to be a GSM terminal containing a SIM card with electronically stored user and equipment specific information such as the ICCID number. ICCID is the fabricated code that in prior art solution is written on the original card only to show the card serial number. The SIM card also holds a private key being one of the keys in a key pair of an asymmetric encryption system.

The authentication server keeps track of user identities on the basis of the A-number of the mobile terminals. It also holds the public key being the other key in the key pair of said asymmetric encryption system.

Figure 1 presents the method of the invention in form of a signal diagram.

In step 1 the user sends a request for a service to a service provider from his mobile terminal. In figure 1 it is assumed that the mobile terminal has an Internet connection through e.g. the Wireless Application Protocol (WAP), interface and can thus communicate with the service provider. This might take place by e.g. clicking on some Internet home page of the service provider, which causes a request message for the service to be sent. A more usual scenario would be that the user sends this request from his personal computer (PC).

As a reply to the request, the service provider sends a message back to the PC or the mobile terminal and asks in step 2 the user to give a password, a user name and his telephone number in order to get access to the service. The telephone number asked is the Integrated Service Digital Network Number, MSISDN, which is the standard international telephone number used to identify a given subscriber.

The user then sends the requested information to the service provider in step 3 from the mobile terminal or from the PC by keying in necessary details in the fields of a formatted message that came from the service provider in step 2.

The service provider then sends the telephone number to the authentication server in step 4 in order to check if the user is known and has the right to the requested service.

In step 5, the authentication server checks the user on the basis of the telephone number, by means of which it can identify the user, and if the user is known, it generates a random number. Thereafter it creates a challenge comprising a header, said created random number and possible additional information. The header contains information about the session ID, message type, message count etc.

Additional information that can be added is the electronic (or digital) signature of the server. If this is made, the SIM card has to have the public key of the server. Thus the electronic signature and the checking of that can be made in both directions. The SIM card assures the sender by means of the public key of the sender. If this additional feature is used, the server also challenge the ICCID code by sending it in a message that is digitally signed.

The challenge is sent further via the Short Message Service Center (SMSC) to the SIM card of the user's mobile terminal in step 6. The challenge is sent in form of a SMS message classified as class 2 in the ETSI standard, which enables that it can go directly to SIM, which starts a program that executes steps 7 and 8. As the message goes through the SMSC, the number from which the message came is always added as information.

In step 7, the SIM card reads the ICCID number of the mobile terminal and creates a message consisting of said challenge together with said ICCID and a header for the message. A hash is formed from said message by means of e.g. the SHA-1 protocol, which hash is signed by said private key stored in the SIM card.

In step 8, the signed hash is sent to the authentication server.

In step 9, the authentication server decrypts the message with said public key stored at the authentication server, which public key corresponds to said private key. The authentication server then compares the content of the decrypted message preferably at least with the originally created random number and/or checks if the ICCID code of the message match with the user's ICCID code and/or it checks if the message was sent from the right telephone number. In the most preferable embodiment, all these three things are checked.

If the information checked matched, a confirmation is sent to the service provider in step 10, which gives access to the user to use the service.

## Claims

1. Method of user authentication in a network where a mobile terminal can request for a service from a service provider and send identity information of the user of the mobile terminal to the service provider, the mobile terminal having a smart card with equipment specific information and user specific security functions, wherein the mobile terminal
sends (3) to the service provider the identity information of the user upon a request for using the service for sending, by the service provider, to an authentication server,
receives (6) from the authentication server an authentication challenge including a random number generated by the authentication server,
creates (7) a message in response to the challenge by combining equipment specific information stored in the card and the random number,
digitally signs (7) the message by means of the user specific security functions, and
sends (8) the message to the authentication server.

2. Method of user authentication in a network where a mobile terminal can request for a service from a service provider, the mobile terminal having a smart card with equipment specific information and user specific security functions, wherein the authentication server
receives (3) from the service provider identity information of a user of the mobile terminal upon a request for using the service provided by the service provider, the service provider having received the identity information from the mobile terminal,
checks (5), based on the identity information, if the user is known, and if the user is known, sends (6) an authentication challenge including a random number generated by the authentication server to the mobile terminal,
receives (8) a message from the mobile terminal in response to the challenge including said equipment specific information and the random number, the message being digitally signed by means of the user specific security functions,
verifies (9) the authenticity of the response based on the security functions and comparison of the equipment information in the message with equipment information of the user, and
sends (10) confirmation of successful authentication to the service provider when the equipment information in the message and the equipment information of the user correspond to each other.

3. Method of claim 1 or 2, wherein the smart card of the mobile terminal is a Subscriber Identity Module, SIM, card or an Universal Subscriber Identity Module, USIM, card.

4. Method of any of claims 1-3, wherein the security functions consists of asymmetric security functions, such as RSA public and-private keys.

5. Method of any preceding claim, wherein the authentication server checks (5) if the user is known on the basis of the telephone number of the mobile terminal.

6. Method of any of claims 1-5, wherein the random number is sent (6) in a challenge including also a header and possible additional information.

7. Method of claim 6, wherein said additional information consists of the digital signature of the server.

8. Method claim 7, wherein the digital signature of the server is checked (7) by the smart card by means of the public key of the server held by the smart card.

9. Method of claim 8, wherein the equipment specific information in the card is the Integrated Circuit Card ID, ICCID, number.

10. Method of any of claims 1-9, wherein a hash is created (7) from the message consisting of a header, the random number and the equipment information.

11. Method of any of claims 1-10, wherein the message is signed (7) by a private key stored in the smart card and/or decrypted by a public key stored in the authentication server.

12. Method of any of claims 1-11, wherein the content of the response message is compared (9) at the authentication server to the random number generated (5) by the authentication server, the ICCID number and/or the telephone number of the mobile terminal.

13. A mobile terminal for requesting for a service from a service provider, the mobile terminal having a smart card with equipment specific information and user specific security functions and configured to send identity information of the user of the mobile terminal to the service provider, whereby the mobile terminal is configured to
send to the service provider the identity information (3) of the user upon a request for using the service for sending, by the service provider, to an authentication server,
receive from the authentication server an authentication challenge (6) including a random number generated by the authentication server,
create a message in response to the challenge by combining equipment specific information stored in the card and the random number,
digitally sign the message by means of the user specific security functions, and
send the message (8) to the authentication server.

14. An authentication server for authenticating a mobile terminal enabled to request for a service from a service provider, the mobile terminal having a smart card with equipment specific information and user specific security functions, whereby the authentication server is configured to
receive from the service provider identity information (3) of a user of the mobile terminal upon a request for using the service provided by the service provider, the service provider having received the identity information from the mobile terminal,
check, based on the identity information (3), if the user is known, and if the user is known, send an authentication challenge (6) including a random number generated by the authentication server to the mobile terminal,
receive a message (8) from the mobile terminal in response to the challenge including said equipment specific information and the random number, the message being digitally signed by means of the user specific security functions,
verify the authenticity of the response based on the security functions and comparison of the equipment information in the message with equipment information of the user, and
send confirmation (10) of successful authentication to the service provider when the equipment information in the message and the equipment information of the user correspond to each other.

15. The mobile terminal of claim 13 or authentication server of claim 14, wherein the smart card is a Subscriber Identity Module, SIM, card or an Universal Subscriber Identity Module, USIM, card.

## Patentansprüche

1. Verfahren zur Benutzerauthentifikation in einem Netzwerk, wobei ein mobiles Endgerät einen Dienst von einem Dienstanbieter anfordern und Identitätsinformationen des Benutzers des mobilen Endgeräts an den Dienstanbieter senden kann, wobei das mobile Endgerät eine Smart-Card mit gerätespezifischen Informationen und benutzerspezifischen Sicherheitsfunktionen aufweist, wobei das mobile Endgerät
die Identitätsinformationen des Benutzers bei einer Anforderung für die Verwendung des Dienstes zum Senden, durch den Dienstanbieter, an einen Authentifikationsserver, an den Dienstanbieter sendet (3),
eine Authentifikationsaufforderung, einschließlich einer durch den Authentifikationsserver generierten Zufallsnummer, vom Authentifikationsserver empfängt (6),als Reaktion auf die Aufforderung durch Kombinieren der in der Karte gespeicherten gerätespezifischen Informationen und der Zufallsnummer eine Nachricht erzeugt (7),
die Nachricht mittels der benutzerspezifischen Sicherheitsfunktionen digital signiert (7), und
die Nachricht an den Authentifikationsserver sendet (8).

2. Verfahren zur Benutzerauthentifikation in einem Netzwerk, wobei ein mobiles Endgerät einen Dienst von einem Dienstanbieter anfordern kann, wobei das mobile Endgerät eine Smart-Card mit gerätespezifischen Informationen und benutzerspezifischen Sicherheitsfunktionen aufweist, wobei der Authentifikationsserver
vom Dienstanbieter Identitätsinformationen eines Benutzers bei einer Anforderung für die Verwendung des durch den Dienstanbieter bereitgestellten Dienstes empfängt (3), wobei der Dienstanbieter die Identitätsinformationen vom mobilen Endgerät empfangen hat,
basierend auf den Identitätsinformationen prüft (5), ob der Benutzer bekannt ist, und falls der Benutzer bekannt ist, eine Authentifikationsaufforderung, einschließlich einer durch den Authentifikationsserver generierten Zufallsnummer, an das mobile Endgerät sendet (6),
als Reaktion auf die Aufforderung vom mobilen Endgerät eine Nachricht, einschließlich der gerätespezifischen Informationen und der Zufallsnummer, empfängt (8), wobei die Nachricht mittels der benutzerspezifischen Sicherheitsfunktionen digital signiert wird,
die Authentizität der Antwort basierend auf den Sicherheitsfunktionen und dem Vergleich der Geräteinformationen in der Nachricht mit Geräteinformationen des Benutzers verifiziert (9), und
eine Bestätigung der erfolgreichen Authentifikation an den Dienstanbieter sendet (10), wenn die Geräteinformationen in der Nachricht und die Geräteinformationen des Benutzers miteinander korrespondieren.

3. Verfahren gemäß Anspruch 1 oder 2, wobei die Smart-Card eine Teilnehmer-Identitätsmodul-Karte, SIM(Subscriber Identity Module)-Karte, oder eine Universal-Teilnehmer-Identitätsmodul-Karte, USIM(Universal Subscriber Identity Modul)-Karte, ist.

4. Verfahren gemäß einem der Ansprüche 1-3, wobei die Sicherheitsfunktionen aus asymmetrischen Sicherheitsfunktionen bestehen, wie etwa öffentliche und private RSA-Schlüssel.

5. Verfahren gemäß einem vorhergehenden Anspruch, wobei der Authentifikationsserver auf der Basis der Telefonnummer des mobilen Endgeräts prüft (5), ob der Benutzer bekannt ist.

6. Verfahren gemäß einem der Ansprüche 1-5, wobei die Zufallsnummer in einer Aufforderung, einschließlich auch eines Kopfs und möglichen zusätzlichen Informationen, gesendet wird (6).

7. Verfahren gemäß Anspruch 6, wobei die zusätzlichen Informationen aus der digitalen Signatur des Servers bestehen.

8. Verfahren gemäß Anspruch 7, wobei die digitale Signatur des Servers von der Smart-Card mittels des von der Smart-Card gehaltenen öffentlichen Schlüssels des Servers geprüft wird (7).

9. Verfahren gemäß Anspruch 8, wobei die gerätespezifischen Informationen der Karte der ID-Nummer der integrierten Schaltungskarte, ICCID(Integrated Circuit Card ID)-Nummer, entsprechen.

10. Verfahren gemäß einem der Ansprüche 1-9, wobei aus der aus einem Kopf, der Zufallsnummer und den Geräteinformationen bestehenden Nachricht ein Hash erzeugt wird (7).

11. Verfahren gemäß einem der Ansprüche 1-10, wobei die Nachricht durch einen in der Smart-Card gespeicherten privaten Schlüssel signiert wird (7) und/oder durch einen im Authentifikationsserver gespeicherten öffentlichen Schlüssel entschlüsselt wird.

12. Verfahren gemäß einem der Ansprüche 1-11, wobei der Inhalt der Antwortnachricht am Authentifikationsserver mit der durch den Authentifikationsserver generierten (5) Zufallsnummer, der ICCID-Nummer und/oder der Telefonnummer des mobilen Endgeräts verglichen wird (9).

13. Mobiles Endgerät zum Anfordern eines Dienstes von einem Dienstanbieter, wobei das mobile Endgerät eine Smart-Card mit gerätespezifischen Informationen und benutzerspezifischen Sicherheitsfunktionen aufweist und konfiguriert ist, um Identitätsinformationen des Benutzers des mobilen Endgeräts an den Dienstanbieter zu senden, wobei das mobile Endgerät konfiguriert ist, um
die Identitätsinformationen (3) des Benutzers bei einer Anforderung für die Verwendung des Dienstes zum Senden, durch den Dienstanbieter, an einen Authentifikationsserver, an den Dienstanbieter zu senden,
eine Authentifikationsaufforderung (6), einschließlich einer durch den Authentifikationsserver generierten Zufallsnummer, vom Authentifikationsserver zu empfangen,
als Reaktion auf die Aufforderung durch Kombinieren der in der Karte gespeicherten gerätespezifischen Informationen und der Zufallsnummer eine Nachricht zu erzeugen,
die Nachricht mittels der benutzerspezifischen Sicherheitsfunktionen digital zu signieren und
die Nachricht (8) an den Authentifikationsserver zu senden.

14. Authentifikationsserver zur Authentifikation eines mobilen Endgeräts, das fähig ist, einen Dienst von einem Dienstanbieter anzufordern, wobei das mobile Endgerät eine Smart-Card mit gerätespezifischen Informationen und benutzerspezifischen Sicherheitsfunktionen aufweist, wobei der Authentifikationsserver konfiguriert ist, um vom Dienstanbieter Identitätsinformationen (3) eines Benutzers bei einer Anforderung für die Verwendung des durch den Dienstanbieter bereitgestellten Dienstes zu empfangen, wobei der Dienstanbieter die Identitätsinformationen vom mobilen Endgerät empfangen hat,
basierend auf den Identitätsinformationen (3) zu prüfen, ob der Benutzer bekannt ist, und falls der Benutzer bekannt ist, eine Authentifikationsaufforderung (6), einschließlich einer durch den Authentifikationsserver generierten Zufallsnummer, an das mobile Endgerät zu senden,
als Reaktion auf die Aufforderung vom mobilen Endgerät eine Nachricht (8), einschließlich der gerätespezifischen Informationen und der Zufallsnummer, zu empfangen, wobei die Nachricht mittels der benutzerspezifischen Sicherheitsfunktionen digital signiert wird,
die Authentizität der Antwort basierend auf den Sicherheitsfunktionen und dem Vergleich der Geräteinformationen in der Nachricht mit Geräteinformationen des Benutzers zu verifizieren, und
eine Bestätigung (10) der erfolgreichen Authentifikation an den Dienstanbieter zu senden, wenn die Geräteinformationen in der Nachricht und die Geräteinformationen des Benutzers miteinander korrespondieren.

15. Mobiles Endgerät gemäß Anspruch 13 oder Authentifikationsserver gemäß Anspruch 14, wobei die Smart-Card eine Teilnehmer-Identitätsmodul-Karte, SIM(Subscriber Identity Module)-Karte, oder eine Universal-Teilnehmer-Identitätsmodul-Karte, USIM(Universal Subscriber Identity Modul)-Karte, ist.

## Revendications

1. Procédé permettant d'authentifier un utilisateur dans un réseau où un terminal mobile peut adresser une demande de service auprès d'un prestataire de services et transmettre au prestataire de services des détails sur l'identité de l'utilisateur du terminal mobile, ce terminal mobile étant équipé d'une carte intelligente qui contient des détails propres au matériel ainsi que des fonctions de sécurité propres à l'utilisateur, **caractérisé en ce que** le terminal mobile
transmet (3) au prestataire de services les détails sur l'identité de l'utilisateur dès qu'une demande de service de transmission est adressée, par le prestataire de services, à un serveur d'authentification,
reçoit (6) du serveur d'authentification une contestation de l'authentification qui comprend un nombre aléatoire généré par le serveur d'authentification,
crée (7) un message en réponse à la contestation en combinant les détails propres au matériel qui sont rangés dans la carte avec le nombre aléatoire,
signe (7) numériquement le message en y apposant les fonctions de sécurité propres à l'utilisateur, et
transmet (8) le message au serveur d'authentification.

2. Procédé permettant d'authentifier un utilisateur dans un réseau où un terminal mobile peut adresser une demande de service auprès d'un prestataire de services, le terminal mobile étant équipé d'une carte intelligente qui contient des détails propres au matériel ainsi que des fonctions de sécurité propres à l'utilisateur, **caractérisé en ce que** le serveur d'authentification,
reçoit (3) du prestataire de services les détails sur l'identité d'un utilisateur du terminal mobile dès qu'une demande d'utilisation du service assuré par le prestataire de services est adressée, le prestataire de services ayant reçu les détails sur l'identité transmis par le terminal mobile,
vérifie (5), en fonction des détails sur l'identité, que l'utilisateur est connu, et dans ce cas transmet (6) au terminal mobile une contestation de l'authentification qui comprend un nombre aléatoire généré par le serveur d'authentification,
reçoit (8) du terminal mobile un message en réponse à la contestation, qui comprend les détails propres au matériel ainsi que le nombre aléatoire, le message ayant été numériquement signé au moyen des fonctions de sécurité propres à l'utilisateur,
vérifie (9) l'authenticité de la réponse au moyen des fonctions de sécurité et de la comparaison des détails propres au matériel dans le message avec les détails propres au matériel communiqués par l'utilisateur, et
transmet (10) au prestataire de services une confirmation selon laquelle l'authentification a été menée à bien lorsque les détails propres au matériel qui figurent dans le message correspondent avec les détails propres au matériel qui ont été communiqués par l'utilisateur.

3. Procédé selon la revendication 1 ou 2, **caractérisé en ce que** la carte intelligente du terminal mobile est une carte portant un module d'identité de l'abonné (SIM) ou une carte portant un module universel d'identité de l'abonné (USIM).

4. Procédé selon l'une quelconque des revendications 1-3, **caractérisé en ce que** les fonctions de sécurité sont des fonctions de sécurité asymétriques, comme par exemple les clés publiques et privées RSA.

5. Procédé selon l'une quelconque des revendications précédentes, **caractérisé en ce que** le serveur d'authentification vérifie (5) que l'utilisateur est connu en se basant sur le numéro de téléphone du terminal mobile.

6. Procédé selon l'une quelconque des revendications 1-5, **caractérisé en ce que** le nombre aléatoire est envoyé (6) dans un contestation qui comprend également un en-tête et des détails supplémentaires éventuels.

7. Procédé selon la revendication 6, **caractérisé en ce que** ces détails supplémentaires sont constitués de la signature numérique du serveur.

8. Procédé selon la revendication 7, **caractérisé en ce que** la signature numérique du serveur est vérifiée (7) par la carte intelligente au moyen de la clé publique du serveur détenue par la carte intelligente.

9. Procédé selon la revendication 8, **caractérisé en ce que** les détails propres au matériel dans la carte sont constitués du numéro d'identification de la carte à circuit intégré (ICCID).

10. Procédé selon l'une quelconque des revendications 1-9, **caractérisé en ce qu'**un signe de hachage est créé (7) à partir du message composé d'un en-tête, du nombre aléatoire et des détails propres au matériel.

11. Procédé selon l'une quelconque des revendications 1-10, **caractérisé en ce que** le message est signé (7) par une clé privée rangée dans la carte intelligente et/ou décryptée par une clé publique rangée dans le serveur d'authentification.

12. Procédé selon l'une quelconque des revendications 1-11, **caractérisé en ce que** le contenu du message de réponse est comparé (9), au niveau du serveur d'authentification, au nombre aléatoire généré (5) par le serveur d'authentification, au numéro ICCID et/ou au numéro de téléphone du terminal mobile.

13. Terminal mobile servant à adresser une demande de service auprès d'un prestataire de services, le terminal mobile étant équipé d'une carte intelligente qui contient des détails propres au matériel ainsi que des fonctions de sécurité propres à l'utilisateur, et configuré de manière à transmettre, au prestataire de services, des détails sur l'identité de l'utilisateur du terminal mobile, **caractérisé en ce que** le terminal mobile est configuré de manière à
transmettre au prestataire de services les détails (3) sur l'identité de l'utilisateur dès qu'une demande d'utilisation du service de transmission est adressée, par le prestataire de services, à un serveur d'authentification,
recevoir du serveur d'authentification une contestation de l'authentification (6) qui comprend un nombre aléatoire généré par le serveur d'authentification,
créer un message en réponse à la contestation en combinant les détails propres au matériel qui sont rangés dans la carte avec le nombre aléatoire,
signer numériquement le message en y apposant les fonctions de sécurité propres à l'utilisateur, et
transmettre le message(8) au serveur d'authentification.

14. Serveur d'authentification permettant d'authentifier un terminal mobile validé pour adresser une demande de service auprès d'un prestataire de services, le terminal mobile étant équipé d'une carte intelligente qui contient des détails propres au matériel ainsi que des fonctions de sécurité propres à l'utilisateur, **caractérisé en ce que** le serveur d'authentification est configuré de manière à
recevoir du prestataire de services les détails (3) sur l'identité d'un utilisateur du terminal mobile dès qu'une demande d'utilisation du service assuré par le prestataire de services est adressée, le prestataire de services ayant reçu les détails sur l'identité transmis par le terminal mobile,
vérifier sur la base des détails (3) sur l'identité, que l'utilisateur est connu, et dans ce cas transmettre au terminal mobile une contestation de l'authentification (6) qui comprend un nombre aléatoire généré par le serveur d'authentification,
recevoir du terminal mobile un message (8) en réponse à la contestation qui comprend ces détails propres au matériel ainsi que le nombre aléatoire, le message ayant été numériquement signé au moyen des fonctions de sécurité propres à l'utilisateur,
vérifier l'authenticité de la réponse sur la base des fonctions de sécurité et de la comparaison des détails propres au matériel dans le message avec les détails propres au matériel communiqués par l'utilisateur, et
transmettre au prestataire de services une confirmation (10) selon laquelle l'authentification a été menée à bien lorsque les détails propres au matériel qui figurent dans le message correspondent avec les détails propres au matériel qui ont été communiqués par l'utilisateur.

15. Terminal mobile selon la revendication 13 ou serveur d'authentification selon la revendication 14, **caractérisé en ce que** la carte intelligente est une carte portant un module d'identité de l'abonné (SIM) ou une carte portant un module universel d'identité de l'abonné (USIM).
